# EUROPÄISCHE PATENTSCHRIFT

(11) **EP 2 281 497 B1**
(45) Veröffentlichungstag und Bekanntmachung des Hinweises auf die Patenterteilung: **18.06.2014**
(21) Anmeldenummer: 10405128.9
(22) Anmeldetag: 06.07.2010
(51) Int. Cl.: A47L 9/12, B01D 46/00

(54) **Filtervorrichtung für einen Staubsauger**
Filter device for a vacuum cleaner
Dispositif de filtre pour un aspirateur

(30) Priorität: 31.07.2009 CH 12052009
(43) Veröffentlichungstag der Anmeldung: 09.02.2011
(73) Patentinhaber: Lux International AG, 6340 Baar (CH)
(72) Erfinder: Magajna, Andrej, 6230 Postojna (SI); Persolja, Peter, 6230 Postojna (SI)
(74) Vertreter: Rutz, Andrea

(56) Entgegenhaltungen:
- WO-A1-2009/029016
- DE-U1- 9 311 774
- FR-A1- 2 844 174

## Beschreibung

### TECHNISCHES GEBIET

Die vorliegende Erfindung betrifft eine Filterkassette mit einem Feinstaubfilter zum Einsetzen in einen Staubsauger. Im Rahmen der Erfindung liegt auch ein Staubsauger mit eingesetzter Filterkassette.

### STAND DER TECHNIK

Eine Filterkassette mit einem Feinstaubfilter zum Einsetzen in einen Staubsauger ist aus WO 2007/099052 A1 bekannt.

In der FR 2 844 174 ist eine Filterkassette für einen Staubsauger offenbart, bei welcher ein Filter in einem äußeren Rahmen aufgenommen ist. Am Rahmen ist ein Schwenkbügel angebracht, mittels welchem die Filterkassette aus dem Staubsauger herausgezogen werden kann.

### DARSTELLUNG DER ERFINDUNG

Der Erfindung liegt die Aufgabe zugrunde, eine Filterkassette mit einem Feinstaubfilter zum Einsetzen in einen Staubsauger zu schaffen, welche einfach handhabbar und betriebssicher in einen Staubsauger einsetzbar ist.

Zur erfindungsgemäßen Lösung der Aufgabe führt eine Filterkassette, welche die folgenden Merkmale aufweist:
- einen von einer Vorderseite und einer Rückseite begrenzten, den Feinstaubfilter aufnehmenden Seitenrahmen,
- einen an der Vorderseite der Filterkassette an gegenüberliegenden Seiten des Seitenrahmens drehbar gelagerten Schwenkbügel, der mit seitlichen Schenkeln den Seitenrahmen auf gegenüberliegenden Seiten übergreift, wobei vom Seitenrahmen eine Drehachse für den Schwenkbügel definierende, in entsprechende Lageröffnungen in den seitlichen Schenkeln des Schwenkbügels eingreifende Lagerzapfen abragen, und
- von den seitlichen Schenkeln parallel zur Drehachse und in radialem Abstand zu dieser nach außen abragende, durch eine Schwenkbewegung des Schwenkbügels zum Hintergreifen von in einem Staubsauger angeordneten Halterungen vorgesehene Haltenocken.

Bei einer bevorzugten Ausführung sind an jedem Schenkel in einem Abstand zur Drehachse und durch einen Schwenkwinkel von 90° von einander beabstandete, vom Schenkel radial abragende Rastnocken zum Einrasten in ein auf beiden Seiten des Seitenrahmens angeordnetes Rastteil angeordnet, wobei die Rastnocken bezüglich des Rastteils so angeordnet sind, dass sich für den Schwenkbügel je eine Rastposition in von der Vorderseite der Filterkassette aufragender und in der Vorderseite der Filterkassette anliegender Lage ergibt.

Zweckmäßigerweise ragt vom Seitenrahmen rechtwinklig ein umlaufender Stegstreifen mit an dessen freiem Ende rechtwinklig in Richtung der Rückseite der Filterkassette abgewinkeltem Schenkelstreifen unter Bildung einer gegen die Rückseite hin offenen, den Seitenrahmen umlaufenden Rinne zur Aufnahme einer Dichtungsmasse ab.

Bevorzugt ragt das vorzugsweise mit einem schalenförmigen Aufnahmeteil für die Rastnocken ausgestattete Rastteil vom Stegstreifen vertikal in Richtung der Drehachse ab.

Bei einer bevorzugten Ausführung ragen auf den beiden nicht von den Schenkeln des Schwenkbügels übergriffenen Seiten des Seitenrahmens zwei Laschen nach außen ab, wobei von der gegen die Rückseite der Filterkassette weisenden Seite jeder Lasche ein zur Anlage an im Innern eines Staubsaugers entsprechend angeordneten Schaltflächen zur Betätigung von beispielsweise Mikrosechaltern vorgeschener Schaltnocken rechtwinklig abragt.

Bei einer weiter bevorzugten Ausführung ist an der Rückseite der Filterkassette ein Aktivkohlefilter angeordnet ist.

Bevorzugt ist der Aktivkohlefilter in einem passgenau und auswechselbar in den Seitenrahmen einsetzbaren Rahmenteil angeordnet ist. Zum lösbaren Fixieren des Rahmenteils können im Seitenrahmen Schlitze zur Aufnahme von am Rahmenteil angeordneten Stegen vorgesehen sein.

### KURZE BESCHREIBUNG DER ZEICHNUNGEN

Weitere Vorteile, Merkmale und Einzelheiten der Erfindung ergeben sich aus der nachfolgenden Beschreibung bevorzugter Ausführungsbeispiele sowie anhand der Zeichnung, die lediglich zur Erläuterung dient und nicht einschränkend auszulegen ist. Die Zeichnung zeigt schematisch in
- Fig. 1: eine Schrägsicht von oben auf die Vorderseite einer Filterkassette mit dem Rastbügel in Offenstellung;
- Fig. 1a: eine Seitenansicht der Filterkassette von Fig.1;
- Fig. 2: die Filterkassette von Fig. 1 mit dem Rastbügel in Schliessstellung;
- Fig. 3: die Filterkassette von Fig. 2 mit auf der Rückseite angeordnetem Aktivkohlefilter;
- Fig. 4: eine Schrägsicht von unten auf die Rückseite der Filterkassette von Fig. 3;
- Fig. 5: eine Schrägsicht von vorne auf einen Staubsauger vor den Einsetzen der Filterkassette von Fig. 3;
- Fig. 6: der Staubsauger von Fig. 5 mit eingesetzter Filterkassette;
- Fig. 7: einen vertikalen Längsschnitt durch den vorderen Teil des Staubsaugers von Fig. 6 mit eingesetzter Filterkassette;
- Fig. 8: einen horizontalen Längsschnitt durch den vorderen Teil des Staubsaugers von Fig. 6 mit eingesetzter Filterkassette.

### BESCHREIBUNG BEVORZUGTER AUSFÜHRUNGSFORMEN

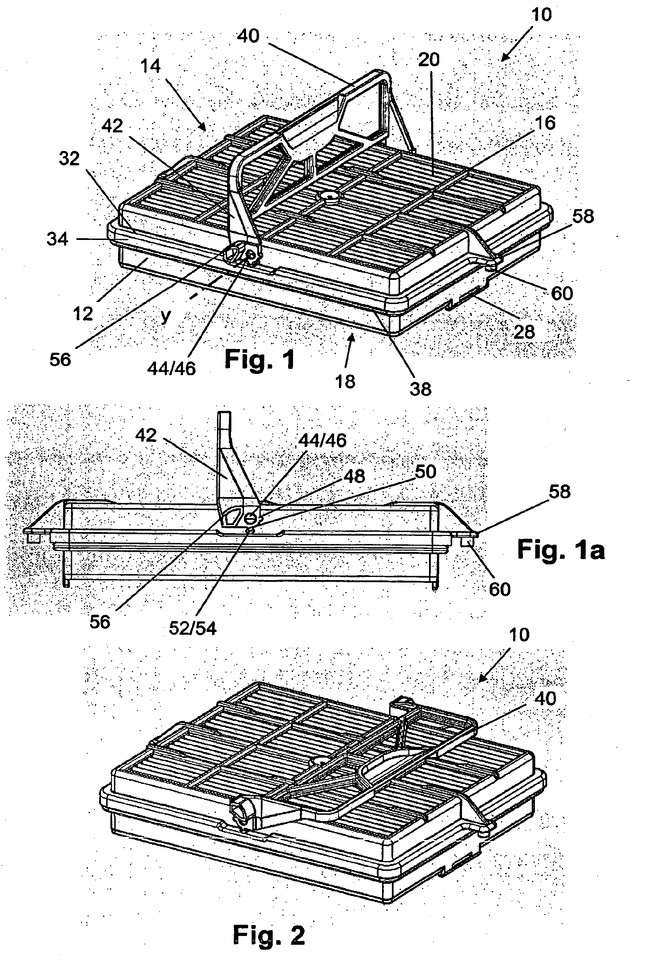

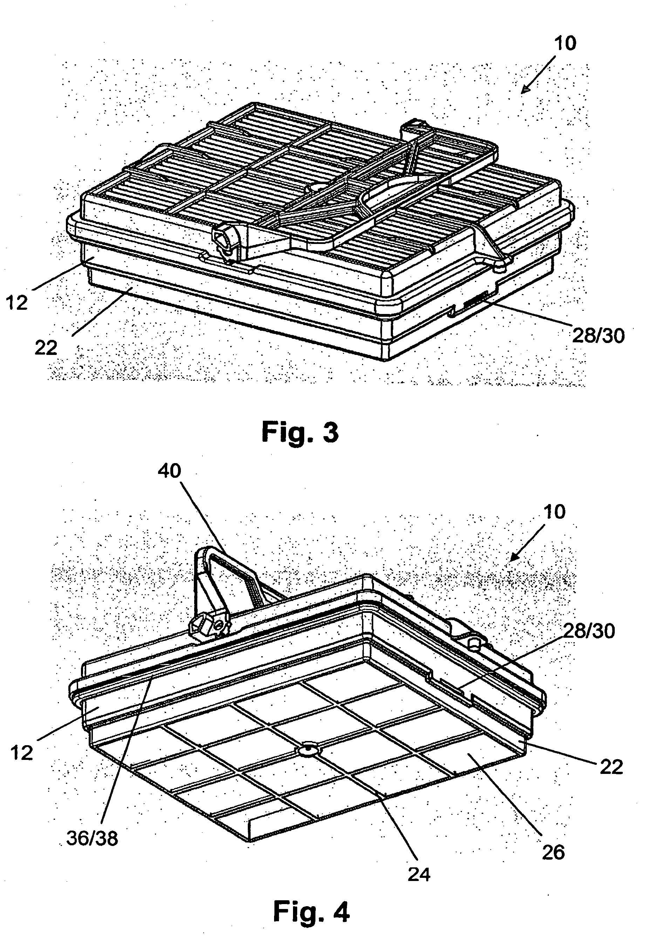

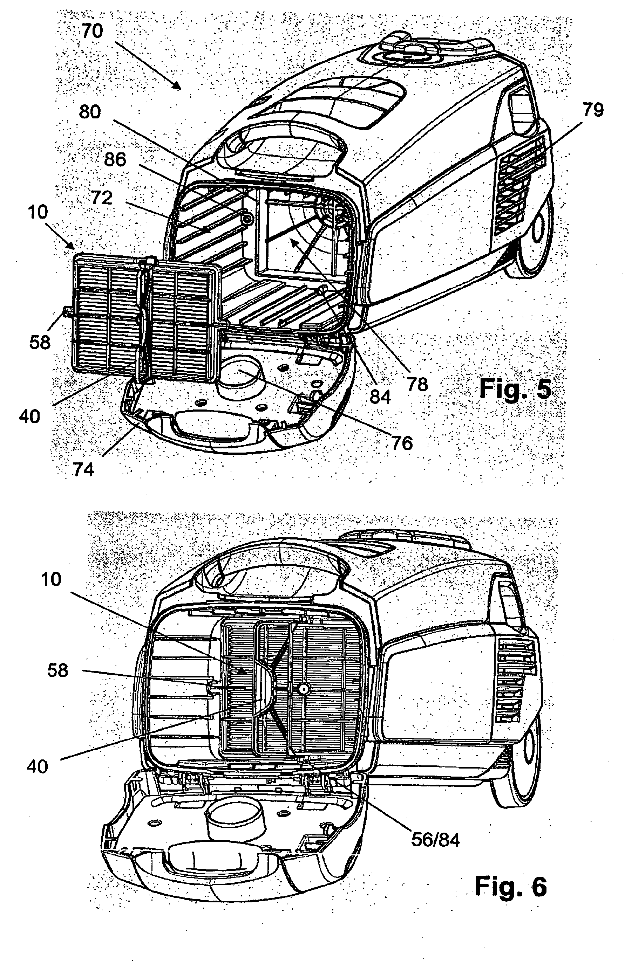

Eine in den Fig. 1 bis 4 gezeigte Filterkassette 10 für einen in den Fig. 5 bis 8 dargestellten Staubsauger 70 weist einen rechteckförmigen, auf einer Vorderseite 14 von einem Gitter 16 abgedeckten und auf der Rückseite 18 offenen Seitenrahmen 12 auf. Im Innern der Filterkassette 10 ist ein Feinstaubfilter 20, z. B. ein HEPA-Filter, eingesetzt und an der Rückseite 18 in den Seitenrahmen 12 eingeklebt. An der Rückseite 18 der Filterkassette 10 ist ein in einem einseitig von einem Gitterteil 24 abgedeckten Rahmenteil 22 angeordneter Aktivkohlefilter 26 mit dem Rahmenteil 22 passgenau und auswechselbar in den Seitenrahmen 12 eingesetzt und in diesem lösbar fixiert. Hierzu sind im Seitenrahmen 12 der Filterkassette 10 an zwei gegenüberliegenden Seiten Schlitze 28 vorgesehen. Bei eingesetztem Aktivkohlefilter 26 sind in den Schlitzen 28 entsprechende, am Rahmenteil 22 vorgesehene Stege 30 eingerastet.

Vom Seitenrahmen 12 ragt rechtwinklig ein umlaufender Stegstreifen 32 mit an dessen freiem Ende rechtwinklig in Richtung der Rückseite 18 abgewinkeltem Schenkelstreifen 34 ab. Stegstreifen 32 und Schenkelstreifen 34 bilden mit dem Seitenrahmen 12 eine gegen die Rückseite 18 hin offene, den Seitenrahmen 12 umlaufende Rinne 36 zur Aufnahme einer die Rinne 36 überragenden Dichtungsmasse 38.

Auf der Vorderseite 14 der Filterkassette 10 ist ein an gegenüberliegenden Seiten des Seitenrahmens 12 drehbar gelagerter Schwenkbügel 40 angeordnet. Der Schwenkbügel 40 übergreift mit seitlichen Schenkeln 42 den Seitenrahmen 12 auf gegenüberliegenden Seiten. Vorn Seitenrahmen 12 ragen eine Drehachse y für den Schwenkbügel 40 definierende Lagerzapfen 44 ab, die in entsprechende Lageröffnungen 46 in den seitlichen Schenkeln 42 des Schwenkbügels 40 eingreifen. In einem Abstand zur Drehachse y und durch einen Schwenkwinkel von 90° von einander beabstandet sind an jedem Schenkel 42 zwei radial abragende Rastnocken 48, 50 vorgesehen. Vom Stegstreifen 32 ragt auf beiden Seiten des Seitenrahmens 12 je ein Rastteil 52 vertikal in Richtung der Drehachse y ab. Das freie Ende der Rastteile 52 ist als schalenförmiges Aufnahmeteil 54 für die Rastnocken 48, 50 so ausgebildet, dass die Rastnocken 48, 50 beim Verschwenken des Schwenkbügels 40 von Hand bei entsprechender Schwenklage des Schwenkbügels 40 in das Aufnahmeteil 54 des Rastteils 52 einrasten.

Die Rastnocken 48, 50 sind bezüglich des Rastteils 52 so angeordnet, dass sich für den Schwenkbügel 40 zwei Rastpositionen ergeben. In einer ersten Rastposition ragt der Schwenkbügel 40 in aufgeklappter Stellung rechtwinklig von der Vorderseite 14 der Filterkassette 10 ab. In der zweiten Rastposition liegt der Schwenkbügel 40 in abgeklappter Stellung der Vorderseite der Filterkassette 10 an. Durch die Verrastung der Rastnocken 48, 50 mit dem Rastteil 52 bzw. dessen Aufnahmeteil 54 wird der Schwenkbügel 40 sicher in der jeweiligen Rastposition gehalten und die Filterkassette 10 kann zu einfachen Handhabung ergriffen werden.

Von den seitlichen Schenkeln 42 ragen Haltenocken 56 parallel zur Drehachse y und in radialem Abstand zu dieser nach außen ab. Auf den beiden nicht von den Schenkeln 42 des Schwenkbügels 40 übergriffenen Seiten des Seitenrahmens 12 ragen vom Stegstreifen 32 zwei Laschen 58 nach außen ab. Von der gegen die Rückseite der Filterkassette 10 weisenden Seite jeder Lasche 58 ragt ein Schaltnocken 60 rechtwinklig ab.

Der Einbau der Filterkassette 10 in einen Staubsauger und die Funktion der vorstehend beschriebenen Teile der Filterkassette 10 werden nachfolgend anhand der Fig. 5 bis 8 beschrieben.

Ein in den Fig. 5 und 6 dargestellter Staubsauger 70 weist einen von einem Verschlussdeckel 74 mit Ansaugöffnung 76 verschliessbaren Staubraum 72 und einen dem Staubraum 72 nachgeordneten Gebläseraum 78 auf Im Gebläseraum 78 ist ein Saugaggregat 80 mit einer dem Staubraum 72 zugewandten Saugseite und einer gegen Luftaustrittsöffnungen 79 weisenden Blasseite angeordnet. Bei ordnungsgemässem Betrieb des Staubsaugers befindet sich im Staubraum 72 ein in der Zeichnung nicht dargestellter, mit der Ansaugöffnung 76 verbundener Staubfilterbeutel. Ein Feinstaubfilter -- im vorliegenden Fall die Filterkassette 10 -- trennt den Staubraum 72 vom Gebläseraum 78.

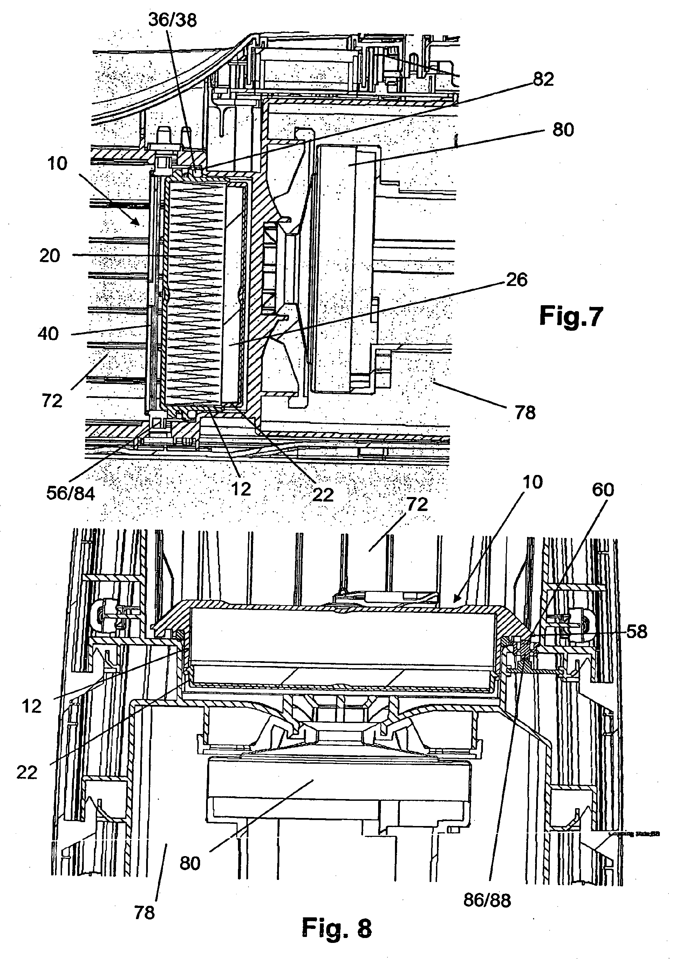

Wie in den Fig. 7 und 8 erkennbar, ist die gegen den Staubraum 72 gerichtete Öffnung des Gebläseraum 78 von einem umlaufenden Flanschteil 82 gebildet. Bei ordnungsgemäß eingesetzter Filterkassette 10 wird die Rinne 36 mit der überstehenden Dichtungsmasse 38 gegen das Flanschteil 82 gedrückt, so dass die Filterkassette 10 mit ihrem rückseitigen Rand dem durch das Flanschteil 82 gebildeten Öffnungsrand des Gebläseraums 78 dicht anliegt.

Beim Einsetzen der Filterkassette 10 befindet sich der Schwenkbügel 40 in der von der Vorderseite 12 rechtwinklig abragenden Rastposition und kann deshalb von Hand bequem gefasst und in den Staubraum 72 hinein bis zum Anschlag der Rinne 36 bzw. der Dichtungsmasse 38 mit dem die Öffnung zum Gebläseraum 78 begrenzenden Flanschteil 80 geführt werden. In dieser Anschlagstellung wird der Schwenkbügel 40 abgeklappt, d.h. um einen Winkel von 90° in seine zweite Rastposition umgelegt. Hierbei werden auch die Haltenocken 56 um einen Winkel von 90° um die Drehachse y verschwenkt, hintergreifen durch die Schwenkbewegung im Staubraum 72 angeordnete Halterungen 84 und liegen diesen bei vollständig abgeklapptem Schwenkbügel 40 kraftschlüssig an, so dass die Filterkassette 10 gegen die Öffnung zum Gebläseraum 78 gedrückt wird. Die Halterungen 84 sind so angeordnet, dass die Filterkassette 10 nur bei aufgeklapptem Schwenkbügel 40 korrekt eingesetzt und anschließend durch Abklappen des Schwenkbügels 40 fixiert werden kann.

Bei korrekt eingesetzter Filterkassette 10 kontaktieren die von den Laschen 58 abragenden Schaltnocken 60 im Innern des Staubsaugers 70 entsprechend angeordnete Schaltflächen 86 von beispielsweise Mikroschaltern 88, welche bei Betätigung den Staubsauger 70 in einen betriebsbereiten Zustand versetzen. Ohne korrekt eingesetzte Filterkassette 10 sind die Schalter 88 in einem Off-Zustand. Erst bei korrekt eingesetzter Filterkassette 10 wird somit der Staubsauger 70 aktiviert. Durch das Umklappen des Schwenkbügels 40 und den damit über die den Halterungen 84 kraftschlüssig anliegenden 56 ausgeübten Druck auf die Filterkassette 10 ergibt sich neben einer ausgezeichneten Abdichtung gegen den Gebläseraum 78 auch eine sichere Schalterbetätigung.

**BEZUGSZEICHENLISTE**

| | | | |
|---|---|---|---|
| 10 | Filterkassette | 48, 50 | Rastnocken |
| 12 | Seitenrahmen | 52 | Rastteil |
| 14 | Vorderseite | 54 | Aufnahmeteil |
| 16 | Gitter | 56 | Haltenocken |
| 18 | Rückseite | 58 | Laschen |
| 20 | Feinstaubfilter | 60 | Schaltnocken |
| 22 | Rahmenteil | 70 | Staubsauger |
| 24 | Gitterteil | 72 | Staubraum |
| 26 | Aktivkohlefilter | 74 | Verschlussdeckel |
| 28 | Schlitze | 76 | Ansaugöffnung |
| 30 | Stege | 78 | Gebläseraum |
| 32 | Stegstreifen | 79 | Luftaustrittsöffnungen |
| 34 | Schenkelstreifen | 80 | Saugaggregat |
| 36 | Rinne | 82 | Flanschteil |
| 38 | Dichtungsmasse | 84 | Halterungen |
| 40 | Schwenkbügel | 86 | Schaltflächen |
| 42 | Schenkel | 88 | Mikroschalter |
| 44 | Lagerzapfen | y | Drehachse |
| 46 | Lageröffnungen | | |

## Patentansprüche

1. Filterkassette mit einem Feinstaubfilter (20) zum Einsetzen in einen Staubsauger (70), welche Filterkassette (10) die folgenden Merkmale aufweist:
- einen von einer Vorderseite (14) und einer Rückseite (18) begrenzten, den Feinstaubfilter (20) aufnehmenden Seitenrahmen (12), und
- einen an der Vorderseite (14) der Filterkassette (10) an gegenüberliegenden Seiten des Seitenrahmens (12) drehbar gelagerten Schwenkbügel (40),
**dadurch gekennzeichnet, dass**
der Schwenkbügel (40) mit seitlichen Schenkeln (42) den Seitenrahmen (12) auf gegenüberliegenden Seiten übergreift, wobei vom Seitenrahmen (12) eine Drehachse (y) für den Schwenkbügel (40) definierende, in entsprechende Lageröffnungen (46) in den seitlichen Schenkeln (42) des Schwenkbügels (40) eingreifende Lagerzapfen (44) abragen, und dass die Filterkassette zudem Haltenocken (56) aufweist, welche von den seitlichen Schenkeln (42) parallel zur Drehachse (y) und in radialem Abstand zu dieser nach außen abragen, und welche durch eine Schwenkbewegung des Schwenkbügels (40) zum Hintergreifen von in einem Staubsauger (70) angeordneten Halterungen (82) vorgesehen sind.

2. Filterkassette nach Anspruch 1, **dadurch gekennzeichnet, dass** an jedem Schenkel (42) in einem Abstand zur Drehachse (y) und durch einen Schwenkwinkel von 90° von einander beabstandete, vom Schenkel (42) radial abragende Rastnocken (48, 50) zum Einrasten in ein auf beiden Seiten des Seitenrahmens (12) angeordnetes Rastteil (52) angeordnet sind, wobei die Rastnocken (48, 50) bezüglich des Rastteils (52) so angeordnet sind, dass sich für den Schwenkbügel (40) je eine Rastposition in von der Vorderseite (14) der Filterkassette (10) aufragender und in der Vorderseite (14) der Filterkassette (10) anliegender Lage ergibt.

3. Filterkassette nach Anspruch 1 oder 2, **dadurch gekennzeichnet, dass** vom Seitenrahmen (12) rechtwinklig ein umlaufender Stegstreifen (32) mit an dessen freiem Ende rechtwinklig in Richtung der Rückseite (18) der Filterkassette (10) abgewinkeltem Schenkelstreifen (34) unter Bildung einer gegen die Rückseite (18) hin offenen, den Seitenrahmen (12) umlaufenden Rinne (36) zur Aufnahme einer Dichtungsmasse (38) abragt.

4. Filterkassette nach Anspruch 2 und 3, **dadurch gekennzeichnet, dass** das vorzugsweise mit einem schalenförmigen Aufnahmeteil (54) für die Rastnocken (48, 50) ausgestattete Rastteil (52) vom Stegstreifen (32) vertikal in Richtung der Drehachse (y) abragt.

5. Filterkassette nach einem der Ansprüche 1 bis 4, **dadurch gekennzeichnet, dass** auf den beiden nicht von den Schenkeln (42) des Schwenkbügels (40) übergriffenen Seiten des Seitenrahmens (12) zwei Laschen (58) nach außen abragen, wobei von der gegen die Rückseite (18) der Filterkassette (10) weisenden Seite jeder Lasche (58) ein zur Anlage an im Innern eines Staubsaugers (70) entsprechend angeordneten Schaltflächen (86) zur Betätigung von beispielsweise Mikroschaltern (88) vorgesehener Schaltnocken (60) rechtwinklig abragt.

6. Filterkassette nach einem der Ansprüche 1 bis 5, **dadurch gekennzeichnet, dass** an der Rückseite (18) der Filterkassette (10) ein Aktivkohlefilter (26) angeordnet ist.

7. Filterkassette nach Anspruch 6, **dadurch gekennzeichnet, dass** der Aktivkohlefilter (26) in einem passgenau und auswechselbar in den Seitenrahmen (12) einsetzbaren Rahmenteil (22) angeordnet ist.

8. Filterkassette nach Anspruch 7, **dadurch gekennzeichnet, dass** im Seitenrahmen (12) Schlitze (28) zur Aufnahme von am Rahmenteil (22) angeordneten Stegen (30) zum lösbaren Fixieren des Rahmenteils (22) im Seitenrahmen (12) vorgesehen sind.

9. Staubsauger mit in diesem eingesetzter Filterkassette (10) nach einem der vorangehenden Ansprüche.

## Claims

1. Filter cartridge having a fine dust filter (20) for use in a vacuum cleaner (70), said filter cartridge (10) having the following features:
- a side frame (12) which is bounded by a front side (14) and a rear side (18) and receives the fine dust filter (20), and
- a pivoting handle (40) that is mounted on the front side (14) of the filter cartridge (10) in a rotatable manner on opposite sides of the side frame (12),
**characterized in that**
the pivoting handle (40) engages over the side frame (12) on opposite sides by way of lateral limbs (42), wherein bearing pins (44) that define a rotation axis (y) for the pivoting handle (40) and engage in corresponding bearing openings (46) in the lateral limbs (42) of the pivoting handle (40) project from the side frame (12), and **in that** the filter cartridge additionally has retaining cams (56) which project outwardly from the lateral limbs (42) in a manner parallel to the rotation axis (y) and at a radial distance therefrom, and which are provided to engage, by way of a pivoting movement of the pivoting handle (40), behind holders (82) arranged in a vacuum cleaner (70).

2. Filter cartridge according to Claim 1, **characterized in that** latching cams (48, 50), projecting radially from the limb (42), for latching in a latching part (52) that is arranged on both sides of the side frame (12) are arranged on each limb (42) at a distance from the rotation axis (y) and in a manner spaced apart from one another by a pivot angle of 90°, wherein the latching cams (48, 50) are arranged with respect to the latching part (52) such that respective latching positions in a position projecting from the front side (14) of the filter cartridge (10) and resting on the front side (14) of the filter cartridge (10) are produced for the pivoting handle (40).

3. Filter cartridge according to Claim 1 or 2, **characterized in that** an encircling web strip (32) projects at right angles from the side frame (12), said encircling web strip (32) having at its free end limb strips (34) that are angled at right angles in the direction of the rear side (18) of the filter cartridge (10) forming a channel (36), which is open towards the rear side (18) and encircles the side frame (12), for receiving a sealing material (38).

4. Filter cartridge according to Claims 2 and 3, **characterized in that** the latching part (52), which is equipped preferably with a cup-like receiving part (54) for the latching cams (48, 50) projects vertically from the web strip (32) in the direction of the rotation axis (y).

5. Filter cartridge according to one of Claims 1 to 4, **characterized in that** two tabs (58) project outwardly on the two sides of the side frame (12) which the limbs (42) of the pivoting handle (40) do not engage over, wherein a switching cam (60), which is provided to bear against push buttons (86) arranged in a corresponding manner in the interior of a vacuum cleaner (70) in order to actuate for example microswitches (88), projects at right angles from that side of each tab (58) that faces towards the rear side (18) of the filter cartridge (10).

6. Filter cartridge according to one of Claims 1 to 5, **characterized in that** an activated carbon filter (26) is arranged on the rear side (18) of the filter cartridge (10).

7. Filter cartridge according to Claim 6, **characterized in that** the activated carbon filter (26) is arranged in a frame part (22) that is insertable into the side frame (12) with a precise fit and in an interchangeable manner.

8. Filter cartridge according to Claim 7, **characterized in that** slots (28) for receiving webs (30), arranged on the frame part (22), for releasably fixing the frame part (22) in the side frame (12), are provided in the side frame (12).

9. Vacuum cleaner in which a filter cartridge (10) according to one of the preceding claims is inserted.

## Revendications

1. Cassette de filtre comprenant un filtre à poussière fine (20) destiné à être utilisé dans un aspirateur (70), laquelle cassette de filtre (10) présentant les caractéristiques suivantes :
- un cadre latéral (12) limité par un côté avant (14) et un côté arrière (18), recevant le filtre à poussière fine (20), et
- un arceau pivotant (40) monté à rotation sur le côté avant (14) de la cassette de filtre (10) au niveau de côté opposé du cadre latéral (12),
**caractérisée en ce que**
l'arceau pivotant (40) vient en prise avec des branches latérales (42) par le dessus du cadre latéral (12) sur des côtés opposés, des tourillons de palier (44) définissant un axe de rotation (y) pour l'arceau pivotant (40), venant en prise dans
des ouvertures de palier correspondantes (46) dans les branches latérales (42) de l'arceau pivotant (40) faisant saillie depuis le cadre latéral (12), et **en ce que** la cassette de filtre présente en outre des cames de retenue (56) qui font saillie vers l'extérieur depuis les branches latérales (42) parallèlement à l'axe de rotation (y) et à distance radiale par rapport à celui-ci, et qui sont prévues pour venir en prise par l'arrière par un mouvement de pivotement de l'arceau pivotant (40) avec des fixations (82) disposées dans un aspirateur (70).

2. Cassette de filtre selon la revendication 1, **caractérisée en ce que** des cames d'encliquetage (48, 50) faisant saillie radialement depuis les branches (42), pour l'encliquetage dans une partie d'encliquetage (52) disposée des deux côtés du cadre latéral (12), sont disposées au niveau de chaque branche (42) à distance de l'axe de rotation (y) et sont espacées l'une de l'autre d'un angle de pivotement de 90°, les cames d'encliquetage (48, 50) étant disposés par rapport à la partie d'encliquetage (52) de telle sorte que l'on obtienne pour l'arceau pivotant (40) une position d'encliquetage respective dans une position faisant saillie vers le haut depuis le côté avant (14) de la cassette de filtre (10) et s'appliquant contre le côté avant (14) de la cassette de filtre (10).

3. Cassette de filtre selon la revendication 1 ou 2, **caractérisée en ce qu'**une bande périphérique formant nervure (32) fait saillie depuis le cadre lateral (12) avec une bande formant branche (34) coudée au niveau de son extrémité libre à angle droit dans la direction du côté arrière (18) de la cassette de filtre (10) en formant une rainure (36) ouverte vers le côté arrière (18), entourant le cadre latéral (12), destinée à recevoir une masse d'étanchéité (38).

4. Cassette de filtre selon les revendications 2 et 3, **caractérisée en ce que** la partie d'encliquetage (52) munie de préférence d'une partie de réception en forme de coque (54) pour les cames d'encliquetage (48, 50) fait saillie depuis la bande formant nervure (32) verticalement dans la direction de l'axe de rotation (y).

5. Cassette de filtre selon l'une quelconque des revendications 1 à 4, **caractérisée en ce que** deux pattes (58) font saillie vers l'extérieur des deux côtés du cadre latéral (12) qui ne son pas en prise par le dessus par les branches (42) de l'arceau pivotant (40), une came de commande (60) destinée à s'appliquer contre des faces de commande (86) disposées de manière correspondante à l'intérieur d'un aspirateur (70) pour l'actionnement, par exemple, de minirupteurs (88), faisant saillie à angle droit depuis le côté de chaque patte (58) tourné vers le côté arrière (18) de la cassette de filtre (10).

6. Cassette de filtre selon l'une quelconque des revendications 1 à 5, **caractérisée en ce qu'**un filtre à charbon actif (26) est disposé sur le côté arrière (18) de la cassette de filtre (10).

7. Cassette de filtre selon la revendication 6, **caractérisée en ce que** le filtre à charbon actif (26) est disposé dans une partie de cadre (22) pouvant être insérée avec ajustement serré et de manière remplaçable dans le cadre latéral (12).

8. Cassette de filtre selon la revendication 7, **caractérisée en ce que** des fentes (28) pour recevoir des nervures (30) disposées sur la partie de cadre (22) pour la fixation amovible de la partie de cadre (22) dans le cadre latéral (12) sont prévues dans le cadre latéral (12).

9. Aspirateur comprenant une cassette de filtre (10) selon l'une quelconque des revendications précédentes, insérée dans celui-ci.
